# EUROPEAN PATENT SPECIFICATION

(11) **EP 2 824 748 B1**
(45) Date of publication and mention of the grant of the patent: **12.10.2016**
(21) Application number: 14176770.7
(22) Date of filing: 11.07.2014
(51) Int. Cl.: H01M 8/18, H01M 8/0273, H01M 8/04276

(54) **Cell frame for improved flow distributing and redox flow battery having the same**
Zellrahmen für verbesserte Strömungsverteilung und Redox-Flussbatterie damit
Cadre de cellule de distribution d'écoulement amélioré et batterie à flux redox ayant celui-ci

(30) Priority: 12.07.2013 KR 20130082065; 12.07.2013 KR 20130082169
(43) Date of publication of application: 14.01.2015
(73) Proprietor: OCI Company Ltd., Seoul 100-718 (KR)
(72) Inventor: KIM, Soo-Whan, 462-807 Gyeonggi-do (KR); KIM, Tae-Yoon, 462-807 Gyeonggi-do (KR); UM, Myung-Sup, 462-807 Gyeonggi-do (KR); HA, Tae-Jung, 462-807 Gyeonggi-do (KR); BANG, Yoo-Kyung, 462-807 Gyeonggi-do (KR)
(74) Representative: Awapatent AB

(56) References cited:
- WO-A1-2008/116248
- WO-A2-2012/033692

## Description

### BACKGROUND OF THE INVENTION

### 1. Technical Field

The present invention relates to a redox flow battery, and more particularly, to a cell frame channel design capable of efficiently distributing an electrolyte throughout the entire electrode area and efficiently distributing the electrolyte at various flow rate conditions at which a battery is operated.

### 2. Description of the Related Art

Uniform distribution of an electrolyte is an important factor associated with cell performance and efficiency in increasing a size of a redox flow battery.

However, there is a limitation in uniformly distributing the electrolyte in a shape of an electrolyte flow channel of an existing redox flow battery frame. In addition, for high-power discharge of the battery, a flow velocity of the electrolyte should be faster than the existing operation condition (flow rate per electrode area: 0.5cc/(min*cm²), discharge current per electrode area: 80mA/cm²) but it is impossible to uniformly distribute the electrolyte using a longitudinal channel formed vertically to a transverse channel in the existing battery. When the electrolyte flows in a battery channel at a fast flow rate, fluid may be biased in a direction in which a pressure drop is small, such that a jet flow injected at a high pressure may be formed by an increased velocity of the electrolyte, thereby decreasing cell efficiency. As the related art, there is provided an 'electrolyte-flowing device for a redox flow battery' in Korean Patent Registration No. 10-1176575 (August 23, 2012).

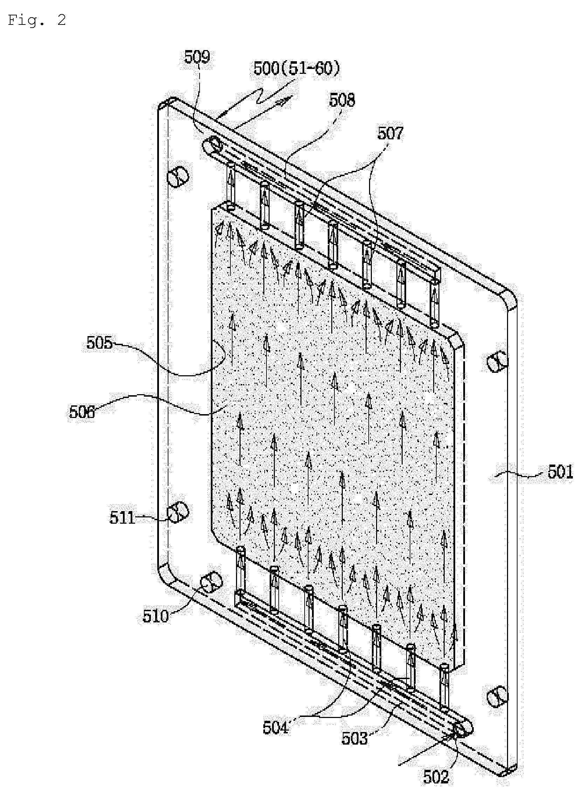

FIG. 2 is a diagram showing a channel structure of the electrolyte-flowing device for a redox flow battery according to the related art. As shown in FIG. 2, a second longitudinal channel 507 is installed vertically to a second transverse channel 508.

WO 2008/116248 relates to a cell stack for a flowing electrolyte battery, which cell stack includes capillary tubes for circulation of electrolyte in the cell stack.

WO 2012/033692 relates to a flow battery electrode assembly utilizing a metalhalide electrolyte and a halogen reactant. The assemble comprises a first impermeable, substantially metal electrode, a second permeable, substantially metal electrode, and at least one electrically conductive spacer connecting the electrodes.

### SUMMARY OF THE INVENTION

The present invention has been made in an effort to provide a channel design in which an electrolyte is distributed at the same pressure condition and the same channel length for efficient distribution of the electrolyte in a large size redox flow battery, an a channel structure in which a buffer section capable of allowing a velocity of the electrolyte to be uniform and a distribution section are mixed at a fast flow velocity condition of the electrolyte.

In addition, the present invention has been made in an effort to provide a cell design including a block for preventing a jet flow of an electrolyte injected at a high pressure.

According to the present invention, there is provided a cell frame for a redox flow battery, the cell frame for a redox flow battery comprising: an electrolyte inlet part disposed adjacent to a side of an electrode of the redox flow battery; an electrolyte outlet part disposed adjacent to the other side of the electrode; a multi-step distribution channel connected to the electrolyte inlet part, deployed in a transverse direction of the cell frame, and divided into a plurality of channels; multi-step buffer channels, each of which is connected to one of the divided channels of the distribution channel, deployed in a longitudinal direction of the cell frame, and divided into a plurality of sub-channels, wherein a width of each sub-channel is increased toward the electrode; a penetration channel connected to an outlet portion of the sub-channels; a mixing zone disposed between the penetration channel and the electrode, and configured to mix electrolytes flowed from the buffer channels; and a mixing block disposed in the mixing zone, and configured to distribute and buffer the electrolytes in the mixing zone.

The distribution channel may be divided into the plurality of channels at a divisional point, wherein a width of the distribution channel before the divisional point is same as a sum of widths of the divided channels of the distribution channel after the division point.

Each of the buffer channels comprises at least one step-divisional point and has a shape in which a sum of widths of the sub-channels after the step-divisional point is greater than a width of the buffer channel connected to the sub-channels, it is preferable that a sum of widths of the sub-channels divided at an (n+1)-th step divisional point is greater than a sum of widths of sub-channels divided at an n-th step divisional point.

It is preferable that a ratio between a width of a buffer channel before the step-divisional point and a sum of widths of sub-channels after the step-divisional point is in a range of 1:1.01 to 1:4.

Meanwhile, a width of an outlet of the buffer channel is in a range of 5 to 30 times a width of an inlet of the buffer channel, and more preferably, the width of the outlet is in a range of 10 to 20 times the width of the inlet. The outlet is connected to the mixing zone, and the inlet is connected to the corresponding divided channel of the distribution channel.

In addition, the mixing zone has the same width as that of the electrode, and one or more mixing blocks for preventing the electrolyte from being injected at a high pressure are arranged in the mixing zone so as to uniformly divide the mixing zone. It is preferable that the mixing block is positioned so that the mixing zone is uniformly divided for uniform redistribution of the electrolyte and a central portion of the mixing block is overlapped with a central portion of each buffer channel, thereby preventing high-pressure injection of the electrolyte. In this case, a cross section of the mixing block has a circular shape or a polygonal shape.

An area occupied by the mixing block in the mixing zone is in a range of 10% to 50% of the entire area of the mixing zone.

It is preferable that one or more multi-step distribution channels have the same channel lengths, and all of the buffer channels have the same lengths.

According to another exemplary embodiment of the present invention, there is provided a redox flow battery including: a cell frame of a redox flow battery; and an electrode supplied with an electrolyte from the cell frame, wherein the cell frame of a redox flow battery includes: an electrolyte inlet part disposed adjacent to a side of an electrode of the redox flow battery; an electrolyte outlet part disposed adjacent to the other side of the electrode a multi-step distribution channel connected to the electrolyte inlet part, deployed in a transverse direction of the cell frame, and divided into a plurality of channels; multi-step buffer channels, each of which is connected to one of the divided channels of the distribution channel, deployed in a longitudinal direction of the cell frame, and divided into a plurality of sub-channels, wherein a width of each sub-channel is increased toward the electrode; a mixing zone disposed between the buffer channels and the electrode, and configured to mix electrolytes flowed from the buffer channels; and a mixing block disposed in the mixing zone, and configured to distribute and buffer the electrolytes in the mixing zone.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram showing a rear surface of a cell frame of a redox flow battery according to an exemplary embodiment of the present invention.
FIG. 2 is a diagram showing a channel structure of a cell frame of a redox flow battery according to the related art.
FIG. 3 is a velocity distribution diagram showing velocity distribution when an electrolyte is introduced at a high velocity in the cell frame of the redox flow battery according to the related art.
FIG. 4 is a diagram showing a front surface of the cell frame of the redox flow battery according to the exemplary embodiment of the present invention.
FIG. 5 is a configuration diagram showing a coupling relation of the cell frame of the redox flow battery according to the exemplary embodiment of the present invention.

### DESCRIPTION OF THE PREFERRED EMBODIMENTS

Hereinafter, a cell frame for improved flow distribution according to an exemplary embodiment of the present invention, and a redox flow battery having the same will be described in detail with reference to the accompanying drawings.

Uniform distribution of an electrolyte is an important factor associated with cell performance and efficiency in increasing a size of a redox flow battery. However, there was a limitation in uniformly distributing the electrolyte in a shape of an electrolyte flow channel of a cell frame of an existing redox flow battery.

Further, for high-power operation of the battery, a flow velocity of the electrolyte should be faster than the existing operation condition, but a longitudinal channel formed vertically to a transverse channel in the existing battery forms a jet flow of the electrolyte injected at a high pressure as shown in FIG. 2, thereby deteriorating cell efficiency.

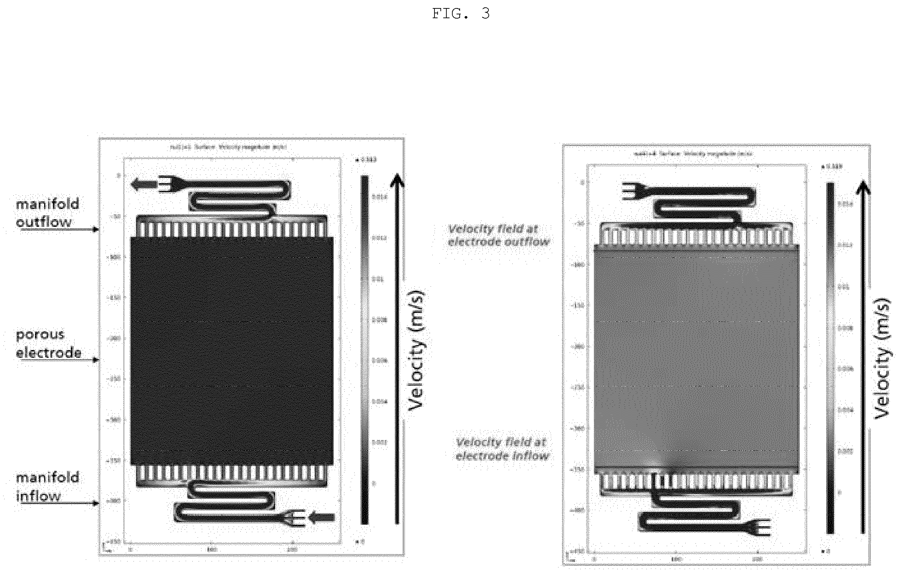

FIG. 3 shows velocity distribution when an electrolyte is introduced at a high velocity in a cell frame of a redox flow battery according to the related art.

Referring to FIG. 3, the jet flow is formed at some region, such that an electrode area may not be entirely utilized, thereby decreasing the cell efficiency.

The present invention is to provide a channel design in which an electrolyte is distributed at the same pressure condition and the same channel length for efficient distribution of the electrolyte in a large size redox flow battery, an a channel structure in which a buffer section capable of allowing a rate of the electrolyte to be uniform and a distribution section are mixed at a fast flow velocity condition of the electrolyte. In addition, the present invention is characterized in that a mixing block for preventing the jet flow of the electrolyte injected at a high pressure is included.

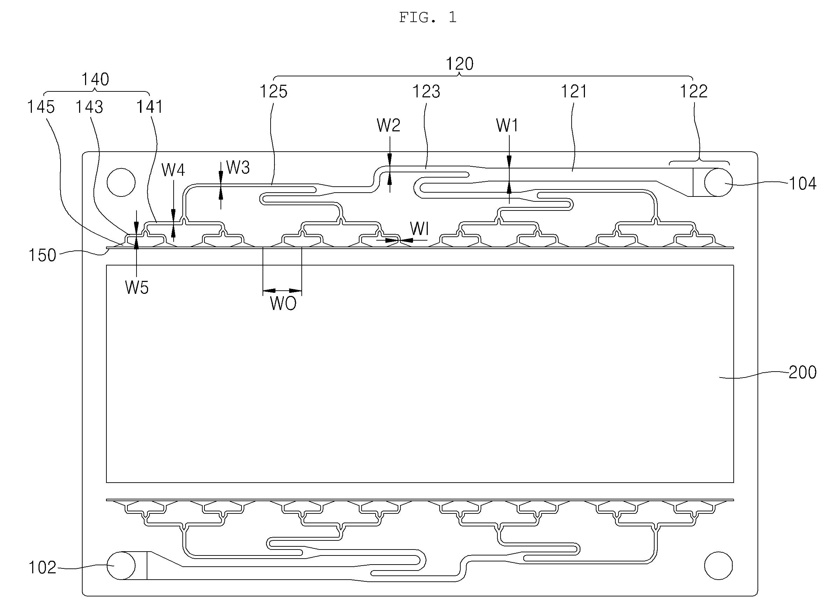

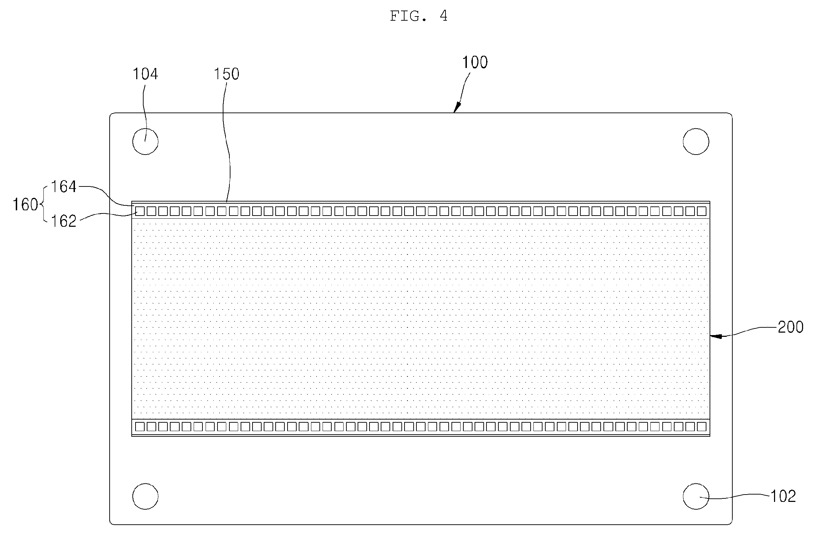

FIG. 1 is a diagram showing a rear surface of the cell frame of the redox flow battery according to an exemplary embodiment of the present invention, and FIG. 4 is a diagram showing a front surface of the cell frame of the redox flow battery according to the exemplary embodiment of the present invention. Referring to FIGS. 1 and 4, the cell frame 100 of the redox flow battery according to the exemplary embodiment of the present invention may serve to uniformly supply an electrolyte to an electrode 200.

The cell frame 100 is disposed in a shape enclosing a peripheral portion of the electrode 200, and in the case of the exemplary embodiment shown in FIGS. 1 and 4, the cell frame 100 has a structure in which the electrolyte is introduced downwardly from the electrode 200, performs a reaction in the electrode 200, and then, is discharged upwardly from the electrode 200. Of course, the structure of the cell frame 100 is not limited thereto, but on the contrary, the cell frame 100 may have a structure in which the electrolyte is introduced upwardly and discharged downwardly.

Referring to FIG. 1, an electrolyte inlet part 102 and an electrolyte outlet part 104 are formed at a right upper end and a left lower end of the cell frame 100, respectively. The electrolyte inlet part and the electrolyte outlet part 102 and 104 are formed in a shape of a through hole penetrating through the cell frame 100.

The electrolyte introduced through the electrolyte inlet part 102 at the left lower end is supplied to the electrode 200 through a distribution channel 120, a buffer channel 140, and a mixing zone 160.

The distribution channel 120, the buffer channel 140, and the mixing zone 160 are formed on and beneath of the electrode 200 in a symmetrical shape.

The distribution channel 120 is connected to the electrolyte inlet part 102 to serve to divide the electrolyte into a plurality of channels. The distribution channel 120 divides the electrolyte and uniformly disperses the electrolyte to thereby flow the electrolyte.

The distribution channel 120 is designed in order to distribute the electrolyte to the entire electrode area, and only in the case in which a pressure drop (ΔP) applied to each distribution channel 120 is equal, uniform distribution of the electrolyte may be induced.

In the case in which the pressure drop (ΔP) is non-uniform, the electrolyte may be biased toward a portion at which the pressure drop (ΔP) is small, and the electrolyte is not distributed to the entire surface of the electrode, such that the cell efficiency may be deteriorated.

Total lengths of each distribution channel is need to be equal to each other, and it is preferable in view of uniform distribution that when the distribution channel is divided, a division direction of all the distribution channels is a transverse direction.

In addition, in each of the distribution channels 120, it is preferable that a bent portion of the distribution channel has a round shape. The reason is that in the case in which the channel is bent at a right angle, the pressure drop may be increased.

Further, in the distribution channel 120, in order to decrease the pressure drop of the electrolyte introduced from the electrolyte inlet part, it is preferable that a channel width before division and a sum of channel widths after division are the same as each other. The reason is that in the case in which the sum of the divided channel widths is smaller than the width of the channel before division, the pressure drop is significantly generated in the channel itself, a larger output is required in a pump in order to secure a predetermined flow rate, such that power consumption is increased.

The distribution channel 120 includes a flow stabilization section 122 connected to the electrolyte inlet part 102 to stabilize a flow of the electrolyte supplied from the electrolyte inlet part 102, a first channel 121 connected to the flow stabilization section 122 to maintain a first channel width w1, a second channel 123 divided from the first channel 121 so as to have a second channel width w2, and a third channel 125 divided from the second channel 123 so as to have a third channel width w3.

The distribution channel 120 may be divided from the first channel 121 into two second channels 123, and two second channels 123 are divided into four third channels 125. In this case, the second channel width w2 is a half of the first channel width w1, and the third channel width w3 is a half of the second channel width w2. That is, even though the distribution channel is divided, the entire channel width is constantly maintained. Therefore, a constant flow velocity is maintained from the first channel 121 up to the third channel 125 in the distribution channel 120, and a stable flow of the electrolyte may be formed.

The distribution channel 120 according to the exemplary embodiment shown in FIG. 1 has four routes to the buffer channel 140, and in each of the routes, lengths of the routes are the same as each other. The reason is to allow the electrolyte distributed through the distribution channel 120 to flow at the same condition.

The buffer channel 140 is a channel connecting the distribution channel 120 and the mixing zone 160.

The buffer channel 140 is formed so that a channel width is increased toward a downstream portion (a lower portion in the flow) unlike the distribution channel 120, such that the buffer channel 140 serves to allow the velocity to be uniform while decreasing the flow velocity.

It is ideal in view of uniform distribution of the electrolyte that all of the buffer channels 140 are divided in the longitudinal direction unlike the distribution channel 120. The buffer channel 140 may be configured as a multi-step form, and it is advantageous in view of a buffer effect that a channel width increased in a multi-step is increased at a ratio smaller than an expansion width WO of a final buffer channel connected to the mixing zone 160.

An outlet width WO of the final buffer channel is in a range of, preferably, 5 to 30 times, and more preferably 10 to 20 times an inlet width WI of the buffer channel. Here, the inlet width WI of the buffer channel means a channel width at a position at which the buffer channel starts, and the outlet width WO of the buffer channel means a channel width at a position at which the buffer channel ends.

In the multi-step buffer channel, a sum of widths of buffer channels divided at an (n+1)-th step is larger than a sum of widths of buffer channels divided at an n-th step.

Further, it is preferable that a ratio between a width of a buffer channel before division and a sum of widths of buffer channels after division at a specific step is in a range of 1:1.01 to 1:4.

The multi-step buffer channel is to distribute the electrolyte to the entire electrode area and improve the buffer effect, and in the case in which the ratio of the channel width is more than 1:4, distribution efficiency may be deteriorated. The reason is that a channel expanded at a ratio more than 1:4 instantly causes a pressure drop, thereby deteriorating distribution efficiency.

On the contrary, in the case in which the ratio is less than 1:1.01, it is impossible to obtain the buffer effect.

Since a distribution function is insignificant in the completely distributed buffer channel, that is, the final buffer channel, the final buffer channel may be expanded so that the outlet width thereof is 5 to 30 times the inlet width thereof, more preferably, 10 to 20 times the inlet width thereof.

In the case in which the outlet width of the final buffer channel is less than 5 times the inlet width thereof, at the time of cell operation at a fast flow rate range (flow rate per electrode area >1cc/(min*cm²)), the buffer effect of the electrolyte is insignificant, thereby making it possible to cause a jet flow, and in the case in which the final buffer channel is more than 30 times, it is difficult to operate the battery while adjusting the flow rate at a slow flow rate range (flow rate per electrode area <0.5cc/(min*cm²)).

The buffer channel 140 includes a fourth channel 141 divided from the third channel of the distribution channel 120 so as to have a fourth channel width w4, a fifth channel 143 divided from the fourth channel 141, and a sixth channel 145 divided from the fifth channel 143 and expanded so that a channel width thereof is 10 to 20 times a fifth channel width w5.

A penetration channel 150 is formed at an outlet portion of the sixth channel 145, such that the electrolyte flowing along the distribution channel 120 and the buffer channel 140 formed at the rear surface of the cell frame 100 flows to the front surface of the cell frame 100.

The penetration channel 150 is connected to the outlet portion of the sixth channel 145, and a width of the penetration channel 150 and the outlet width of the sixth channel 145 are the same as each other.

In addition, the penetration channel 150 has the same width as a width of the mixing zone 160 at the front surface, and the mixing zone 160 is formed so as to have the same width as that of the electrode.

The mixing zone 160 is formed at the front surface of the cell frame 100, and mixing blocks 162 are provided in the mixing zone 160. A mixture channel 164 is formed between the mixing blocks 162 in the mixing zone 160.

The mixing block 162 has a predetermined thickness, and a cross-section thereof has a circular or polygonal shape. The mixing blocks 162 are uniformly arranged in the mixing zone 160, and the mixture channel 164 is formed between the mixing blocks 162.

Since the electrolyte moves between the mixing blocks 162, a movement speed of the electrolyte is uniformly alleviated.

It is preferable that an area occupied by the mixing block 162 in the mixing zone 160 is 10 to 50% of the entire area of the mixing zone 160.

The reason is that in the case in which the area of the mixing block is equal to or less than 10% of the area of the mixing zone, it is difficult to uniformly control the movement velocity of the electrolyte at the time of operation at a fast flow rate range (flow rate per electrode area >1cc/(min*cm²)), and in the case in which the area of the mixing block 162 is more than 50%, the mixture channel 164 becomes narrow, such that the velocity of the electrolyte may be locally increased.

In the case in which the area of the mixing block 162 is more than 50%, a significant pressure drop may be generated in the flow of the electrolyte, and due to this pressure drop, Revolutions per minute (rpm) of the pump needs to be increased in order to secure the same amount of flow rate. Therefore, energy consumption in the pump is increased, which is a cause of deteriorating the entire system efficiency.

Therefore, only in the case in which the area occupied by the mixing block 162 in the mixing zone 160 is in a range of 10 to 50% of the entire area of the mixing zone 160, the pressure drop at a given flow rate may be decreased, and at the same time, the buffer effect may be obtained.

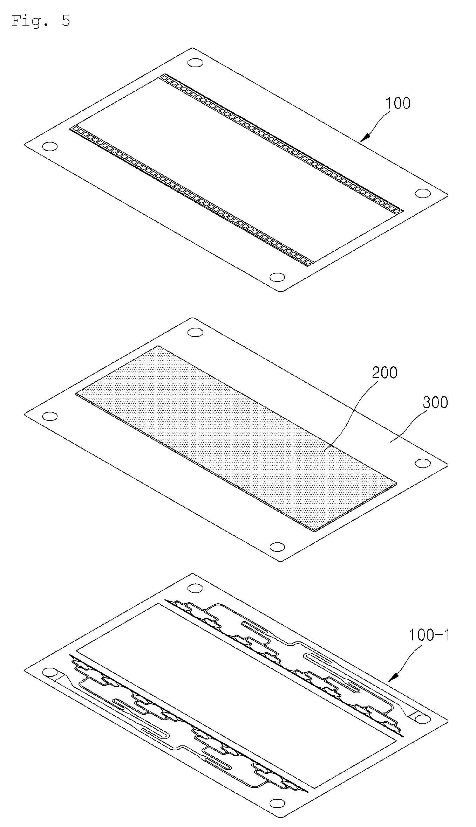

FIG. 5 is a configuration diagram showing a coupling relation of the cell frame of the redox flow battery according to an exemplary embodiment of the present invention.

In the cell frame 100 of a redox flow battery, the distribution channel (120 of FIG. 1) and the buffer channel (140 of FIG. 1) are formed in a groove shape at the rear surface, and a central frame 300 is adhered while covering the distribution channel 120 and the buffer channel 140 formed in the groove shape. An electrode plate 200 is adhered to the central frame 300.

A cell frame 100-1 in which an electrolyte having a different polarity flows is adhered to an opposite side of the central frame 300 while sharing the central frame 300 and the electrode plate 200.

The cell frame providing a flow path of the electrolyte is significantly important in view of improving battery efficiency through efficient distribution of the electrolyte. In the cell frame of the redox flow battery according to the related art, there is a problem that efficiency is deteriorated due to non-uniform distribution of the electrolyte, that is, a phenomenon that a flow of the electrolyte introduced at a high pressure is concentrated at some section at which the pressure of the electrolyte is relieved. However, the present invention solves this problem, such that the electrolyte may be uniformly distributed, and the jet flow may not be generated.

The cell frame according to the present invention is to uniformly distribute the electrolyte and implement the buffer effect. According to the present invention, the electrolyte is uniformly distributed to all of the sections, such that electrolyte may maximally utilize the electrode area, thereby increasing battery efficiency. Maximization of electrode area utilization may decrease a charging time and a discharging time, and at the time of using power with high output, battery efficiency may be maintained through uniform distribution of the electrolyte at the required fast flow velocity condition.

In the cell frame according to the present invention, the jet flow is not generated and the electrolyte may be uniformly distributed, even at the fast flow velocity condition of the electrolyte, by disposing the mixing zone and the mixing block while distributing the electrolyte through the channels having the same channel length as each other under the same pressure condition.

Therefore, in the redox flow battery having the cell frame according to the present invention, the flow of the electrolyte is not concentrated on some section but uniformly distributed, such that the electrode area may be maximally utilized, thereby improving battery efficiency.

## Claims

1. A cell frame for a redox flow battery, the cell frame comprising:
an electrolyte inlet part disposed adjacent to a side of an electrode of the redox flow battery;
an electrolyte outlet part disposed adjacent to the other side of the electrode;
a multi-step distribution channel
connected to the electrolyte inlet part,
deployed in a transverse direction of the cell frame, and
divided into a plurality of channels;
multi-step buffer channels, each of which is connected to one of the divided channels of the distribution channel,
deployed in a longitudinal direction of the cell frame, and
divided into a plurality of sub-channels,
wherein a width of each sub-channel is increased toward the electrode;
a penetration channel connected to an outlet portion of the sub-channels;
a mixing zone
disposed between the penetration channel and the electrode, and
configured to mix electrolytes flowed from the buffer channels; and
a mixing block
disposed in the mixing zone, and
configured to distribute and buffer the electrolytes in the mixing zone.

2. The cell frame of claim 1, wherein the distribution channel is divided into the plurality of channels at a divisional point,
wherein a width of the distribution channel before the divisional point is same as a sum of widths of the divided channels of the distribution channel after the division point.

3. The cell frame of claim 1, wherein each of the buffer channels comprises at least one step-divisional point, and
wherein a sum of widths of the sub-channels after the step-divisional point is greater than a width of the buffer channel connected to the sub-channels.

4. The cell frame of claim 3, wherein a sum of widths of the sub-channels divided at an (n+1)-th step divisional point is greater than a sum of widths of sub-channels divided at an n-th step divisional point.

5. The cell frame of claim 3, wherein a ratio between a width of a buffer channel before the step-divisional point and a sum of widths of sub-channels after the step-divisional point is in a range of 1:1.01 to 1:4.

6. The cell frame of claim 3, wherein a width of an outlet of the buffer channel is in a range of 5 to 30 times a width of an inlet of the buffer channel, and
wherein the outlet is connected to the mixing zone, and the inlet is connected to the corresponding divided channel of the distribution channel.

7. The cell frame of claim 6, wherein the width of the outlet is in a range of 10 to 20 times the width of the inlet.

8. The cell frame of claim 1, wherein the mixing zone has the same width as that of the electrode, and
wherein one or more mixing blocks are arranged in the mixing zone so as to uniformly divide the mixing zone.

9. The cell frame of claim 8, wherein the mixing block is arranged so that a central portion of the mixing block is overlapped with a central portion of each buffer channel.

10. The cell frame of claim 9, wherein a cross section of the mixing block has a circular shape or a polygonal shape.

11. The cell frame of claim 9, wherein an area occupied by the mixing block in the mixing zone is in a range of 10% to 50% of the entire area of the mixing zone.

12. The cell frame of claim 1, comprising one or more multi-step distribution channels,
wherein all of the distribution channels have the same channel length, and
wherein all of the buffer channels have the same length.

13. A redox flow battery, comprising:
a cell frame of the redox flow battery according to claim 1; and
an electrode supplied with an electrolyte from the cell frame.

## Patentansprüche

1. Zellrahmen für eine Redox-Flussbatterie, wobei der Zellrahmen aufweist:
einen Elektrolyt-Einlassteil, der benachbart zu einer Seite einer Elektrode der Redox-Flussbatterie angeordnet ist,
einen Elektrolyt-Auslassteil, der benachbart zu der anderen Seite der Elektrode angeordnet ist,
einen Mehrstufen-Verteilungskanal, der
mit dem Elektrolyt-Einlassteil verbunden ist,
in einer Querrichtung des Zellrahmens angebracht ist und
in mehrere Kanäle aufgeteilt ist;
Mehrstufen-Pufferkanäle, von denen jeder mit einem der aufgeteilten Kanäle des Verteilungskanals verbunden ist, die
in einer Längsrichtung des Zellrahmens angebracht sind und
in mehrere Unterkanäle aufgeteilt sind,
wobei eine Breite eines jeden Unterkanals zur Elektrode hin zunimmt;
einen Durchdringungskanal, der mit einem Auslassteil der Unterkanäle verbunden ist,
eine Durchmischungszone, die
zwischen dem Durchdringungskanal und der Elektrode angeordnet ist
und
konfiguriert ist, die Elektrolyte, die von den Pufferkanälen her eingeströmt sind, zu durchmischen, und
einen Durchmischungsblock, der
in der Durchmischungszone angeordnet ist und
konfiguriert ist, die Elektrolyte in der Durchmischungszone zu verteilen und zu puffern.

2. Zellrahmen nach Anspruch 1, wobei der Verteilungskanal an einem Aufteilungspunkt in die mehreren Kanäle aufgeteilt wird,
wobei eine Breite des Verteilungskanals vor dem Aufteilungspunkt gleich einer Summe von Breiten der aufgeteilten Kanäle des Verteilungskanals hinter dem Aufteilungspunkt ist.

3. Zellrahmen nach Anspruch 1, wobei jeder der Pufferkanäle mindestens einen Stufen-Aufteilungspunkt aufweist und
wobei eine Summe von Breiten der Unterkanäle hinter dem Stufen-Aufteilungspunkt größer als eine Breite des Pufferkanals ist, der mit den Unterkanälen verbunden ist.

4. Zellrahmen nach Anspruch 3, wobei eine Summe von Breiten der Unterkanäle, die an einem (n+1)-ten Stufen-Aufteilungspunkt aufgeteilt wurden, größer als eine Summe von Breiten von Unterkanälen ist, die an einem n-ten Stufen-Aufteilungspunkt aufgeteilt wurden.

5. Zellrahmen nach Anspruch 3, wobei ein Verhältnis zwischen einer Breite eines Pufferkanals vor dem Stufen-Aufteilungspunkt und einer Summe von Breiten von Unterkanälen hinter dem Stufen-Aufteilungspunkt in einem Bereich von 1:1,01 bis 1:4 liegt.

6. Zellrahmen nach Anspruch 3, wobei eine Breite eines Auslasses des Pufferkanals in einem Bereich des 5- bis 30-fachen einer Breite eines Einlasses des Pufferkanals liegt und
wobei der Auslass mit der Vermischungszone verbunden ist und der Einlass mit dem entsprechenden aufgeteilten Kanal des Verteilungskanals verbunden ist.

7. Zellrahmen nach Anspruch 6, wobei die Breite des Auslasses in einem Bereich des 10- bis 20-fachen der Breite des Einlasses liegt.

8. Zellrahmen nach Anspruch 1, wobei die Durchmischungszone die gleiche Breite wie die Elektrode aufweist und
wobei in der Durchmischungszone ein oder mehrere Durchmischungsblöcke so eingerichtet sind, dass die Durchmischungszone gleichmäßig unterteilt wird.

9. Zellrahmen nach Anspruch 8, wobei der Durchmischungsblock so eingerichtet ist, dass sich ein zentraler Anteil des Durchmischungsblocks mit einem zentralen Anteil eines jeden Pufferkanals überlappt.

10. Zellrahmen nach Anspruch 9, wobei ein Querschnitt des Durchmischungsblocks eine kreisförmige Gestalt oder eine Vieleckgestalt aufweist.

11. Zellrahmen nach Anspruch 9, wobei eine Fläche, die vom Durchmischungsblock in der Durchmischungszone eingenommen wird, in einem Bereich von 10 % bis 50 % der Gesamtfläche der Durchmischungszone liegt.

12. Zellrahmen nach Anspruch 1 mit einem oder mehreren Mehrstufen-Verteilungskanälen,
wobei alle Verteilungskanäle die gleiche Kanallänge aufweisen und wobei alle Pufferkanäle die gleiche Länge aufweisen.

13. Redox-Flussbatterie mit:
einem Zellrahmen der Redox-Flussbatterie nach Anspruch 1 und
einer Elektrode, der vom Zellrahmen aus ein Elektrolyt zugeführt wird.

## Revendications

1. Cadre de cellule pour batterie à flux redox, le cadre de cellule comprenant :
une partie d'entrée d'électrolyte disposée en étant juxtaposée à un côté d'une électrode de la batterie à flux redox ;
une partie de sortie d'électrolyte disposée en étant juxtaposée à l'autre côté de l'électrode ;
un canal de distribution à étages multiples
raccordé à la partie d'entrée d'électrolyte,
déployé dans une direction transversale du cadre de cellule, et
divisé en une pluralité de canaux ;
des canaux tampons à étages multiples, dont chacun est raccordé à un des canaux divisés du canal de distribution,
déployés dans une direction longitudinale du cadre de cellule et
divisés en une pluralité de sous-canaux,
dans lequel une largeur de chaque sous-canal est augmentée dans la direction de l'électrode ;
un canal de pénétration raccordé à une portion de sortie des sous-canaux ;
une zone de mélange
disposé entre le canal de pénétration et l'électrode ; et
configuré pour mélanger les électrolytes s'écoulant des canaux tampons ; et
un bloc de mélange
disposé dans la zone de mélange et
configuré pour distribuer et amortir les électrolytes dans la zone de mélange.

2. Cadre de cellule selon la revendication 1, dans lequel le canal de distribution est divisé en la pluralité de canaux au niveau d'un point de division, dans lequel une largeur du canal de distribution avant le point de division est la même qu'une somme des largeurs des canaux divisés du canal de distribution après le point de division.

3. Cadre de cellule selon la revendication 1, dans lequel chacun des canaux tampons comprend au moins un point de division d'étage, et dans lequel un somme des largeurs des sous-canaux après le point de division d'étage est supérieure à une largeur du canal tampon raccordé aux sous-canaux.

4. Cadre de cellule selon la revendication 3, dans lequel une somme des largeurs des sous-canaux divisés à un (n+1) ème point de division d'étage est supérieure à une somme des largeurs des sous-canaux divisés à un n-ème point de division d'étage.

5. Cadre de cellule selon la revendication 3, dans lequel un rapport entre une largeur d'un canal tampon avant le point de division d'étage et une somme des largeurs des sous-canaux après le point de division d'étage est dans une plage de 1 :1.01 à 1 :4.

6. Cadre de cellule selon la revendication 3, dans lequel une largeur d'une sortie du canal tampon est dans une plage de 5 à 30 fois une largeur d'une entrée du canal tampon et
dans lequel la sortie est raccordée à la zone de mélange et l'entrée est raccordée au canal divisé correspondant du canal de distribution.

7. Cadre de cellule selon la revendication 6, dans lequel la largeur de la sortie est dans une plage de 10 à 20 fois la largeur de l'entrée.

8. Cadre de cellule selon la revendication 1, dans lequel la zone de mélange a la même largeur que celle de l'électrode et
dans lequel un ou plusieurs blocs de mélange sont disposés dans la zone de mélange de manière à diviser uniformément la zone de mélange.

9. Cadre de cellule selon la revendication 8, dans lequel le bloc de mélange est agencé de sorte qu'une portion centrale du bloc de mélange soit superposée à une portion centrale de chaque canal tampon.

10. Cadre de cellule selon la revendication 9, dans lequel une section transversale du bloc de mélange a une forme circulaire ou une forme polygonale.

11. Cadre de cellule selon la revendication 9, dans lequel une zone occupée par le bloc de mélange dans la zone de mélange est dans une plage de 10 % à 50 % de la superficie totale de la zone de mélange.

12. Cadre de cellule selon la revendication 1, comprenant un ou plusieurs canaux de distribution à étages multiples,
dans lequel tous les canaux de distribution ont la même longueur de canal et
dans lequel tous les canaux tampons ont la même longueur.

13. Batterie à flux redox, comprenant :
un cadre de cellule de la batterie à flux redox selon la revendication 1 ; et
un électrode alimentée avec un électrolyte provenant du cadre de cellule.
